# EUROPEAN PATENT SPECIFICATION

(11) **EP 2 790 292 B1**
(45) Date of publication and mention of the grant of the patent: **20.10.2021**
(21) Application number: 13787283.4
(22) Date of filing: 10.05.2013
(51) Int. Cl.: H02J 9/06, H02J 7/00

(54) **TEMPORARY BACK-UP POWER SYSTEM AND TEMPORARY BACK-UP POWER METHOD**
TEMPORÄRES NOTSTROMVERSORGUNGSSYSTEM UND TEMPORÄRES NOTSTROMVERSORGUNGSVERFAHREN
SYSTÈME D'ALIMENTATION DE SECOURS TEMPORAIRE ET PROCÉDÉ D'ALIMENTATION DE SECOURS TEMPORAIRE

(30) Priority: 10.05.2012 CN 201210143286
(43) Date of publication of application: 15.10.2014
(73) Proprietor: Huawei Technologies Co., Ltd., Longgang District Shenzhen, Guangdong 518129 (CN)
(72) Inventor: LIU, Xinyu, Shenzhen Guangdong 518129 (CN)
(74) Representative: Körber, Martin Hans
(86) International application number: PCT/CN2013/075477
(87) International publication number: WO 2013/166991

(56) References cited:
- EP-A1- 2 367 260
- WO-A1-88/02191
- WO-A1-2011/097979
- CN-A- 102 104 274
- CN-A- 102 255 345
- CN-A- 102 651 572
- DD-A1- 252 929
- JP-A- H0 261 711
- US-A- 5 568 038
- US-A1- 2003 233 179
- None

## Description

### TECHNICAL FIELD

The present invention relates to the field of battery power supply, and in particular, to an uninterruptible power supply system and an uninterruptible power supply method.

### BACKGROUND

With wide application of power supply systems, important scenarios such as a base station, an airport, and a hospital are required to have an uninterruptible power supply function, where the uninterruptible power supply refers to uninterruptible power backup, which has already become an important indicator for a user to measure a power supply system.

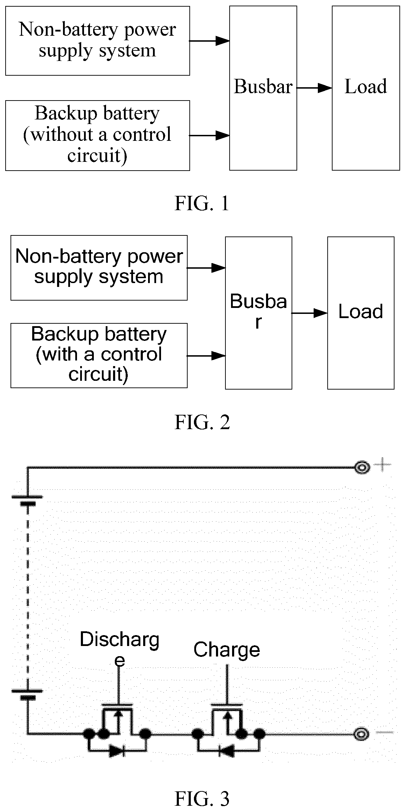

In an uninterruptible power supply solution of the prior art 1, as shown in FIG. 1, an active power supply is a non-battery power supply system, such as commercial power, an oil engine, wind power, or solar power; and a backup power supply is a backup battery without a control circuit. The non-battery power supply system is disposed with a rectification module, and therefore, an output voltage and current of the non-battery power supply system are controllable. Under a normal circumstance, it is considered that the output voltage of the non-battery power supply system is constant. When the non-battery power supply system encounters power-off and a voltage drop is caused, the backup battery without a control circuit can automatically supply power uninterruptibly.

In an uninterruptible power supply solution of the prior art 2, as shown in FIG. 2 and FIG. 3, a primary power supply is a non-battery power supply system, and a backup power supply includes a control circuit and a backup battery; and a discharge switch of the control circuit is switched on by default. The non-battery power supply system is disposed with a rectification module, and therefore, an output voltage and current of the non-battery power supply system are controllable. Under a normal circumstance, it is considered that the output voltage of the non-battery power supply system is constant. When the non-battery power supply system encounters power-off and a voltage drops, because the discharge switch of the control circuit of the backup power supply is switched on by default, the backup power supply supplies power uninterruptibly; uninterruptible power supply means uninterruptible power supply, that is, a loop is formed by a positive electrode of a battery pack-a load-a negative electrode of the battery pack-a parasitic diode inside a charge MOS-a discharge MOS-the negative electrode of the battery pack. In addition, after the control circuit detects a discharge current, the charge MOS is switched on immediately, to supply power to a primary battery for a long time.

EP2523306A1 discloses a method, a device, and a system for supplying power from batteries. The method for supplying power from batteries includes: detecting a power supply state of a cycling battery in a system, where the system firstly uses the cycling battery to supply power to a load; and when a voltage of the cycling battery drops to a voltage threshold, activating a standby battery to supply power to the load. The embodiments of the present invention can implement mixed use of different types of batteries.

In an implementation process of the present invention, the prior art at least has the following disadvantages:
in the prior art 1, because there is no control circuit, the power supply of the non-battery power supply system is unstable; and in the prior art 2, because only one backup battery performs power backup, once the backup battery encounters power-off, a load device encounters powered off. Further prior art provides an example of uninterruptable power supply equipped with a primary and a secondary battery packs, such as in CN 102 104 274.

### SUMMARY

To solve the problem of optimising the control logic in an uninterruptible power supply when a primary power supply and a backup power supply are both batteries, embodiments of the present invention provide an uninterruptible power supply system and an uninterruptible power supply method.

The present invention is defined by an uninterruptible power supply system according to independent claim 1 and an uninterruptible power supply method according to independent claim 3.

Additional features of the invention are provided in the dependent claims. In the following, parts of the description and drawings referring to embodiments which are not covered by the claims are not presented as embodiments of the invention, but as examples useful for understanding the invention.

Beneficial effects brought about by the technical solutions provided in the embodiments of the present invention are that: the first control system in the active battery power supply system and the second control system in the standby battery power supply system are set as an interlocking control structure; therefore, when the active battery power supply system operates, the standby battery power supply system does not operate, and when the standby battery power supply system operates, the active battery power supply system is not charged; the phenomenon of mutual charging and discharging does not occur between the active battery pack and the standby battery pack, and the problem of inter-pack cross current when battery packs are used in parallel is avoided.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of uninterruptible power supply in prior art 1;
FIG. 2 is a schematic diagram of uninterruptible power supply in prior art 2;
FIG. 3 is a schematic diagram of a control system of a backup power supply in prior art 2;
FIG. 4 is a schematic diagram of an uninterruptible power supply system according to Example 1 of the present invention;
FIG. 5 is a schematic diagram of a principle of uninterruptible power supply according to Embodiment 1 of the present invention;
FIG. 6 is a schematic diagram of an uninterruptible power supply system according to Embodiment 1 of the present invention;
FIG. 7 is another schematic diagram of an uninterruptible power supply system according to Embodiment 1 of the present invention;
FIG. 8 is still another schematic diagram of an uninterruptible power supply system according to Embodiment 1 of the present invention; and
FIG. 9 is a flowchart of an uninterruptible power supply method according to Embodiment 2 of the present invention.

### DESCRIPTION OF EMBODIMENTS

To make the objectives, technical solutions, and advantages of the present invention clearer, the following further describes examples not covered by the present invention and embodiments of the present invention in detail with reference to the accompanying drawings.

### Example 1

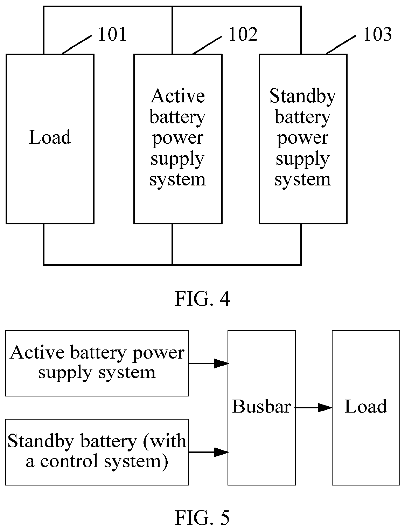

Referring to FIG. 4, the example not covered by the present invention provides an uninterruptible power supply system, and the system includes: a load 101, an active battery power supply system 102, and a standby battery power supply system 103.

The active battery power supply system 102 includes an active battery pack and a first control system, and the standby battery power supply system 103 includes a standby battery pack and a second control system, where the first control system controls the active battery pack to supply power to the load, and the second control system controls the standby battery pack to supply power to the load.

The first control system and the second control system form interlocking control, so as to control that only the active battery pack or only the standby battery pack supplies power to the load at a certain moment.

According to the uninterruptible power supply system provided in the example not covered by the present invention, the first control system in the active battery power supply system and the second control system in the standby battery power supply system are set as an interlocking control structure; therefore, when the active battery power supply system operates, the standby battery power supply system does not operate, and when the standby battery power supply system operates, the active battery power supply system is not charged; the phenomenon of mutual charging and discharging does not occur between the active battery pack and the standby battery pack, and the problem of inter-pack cross current when battery packs are used in parallel is avoided.

### Embodiment 1

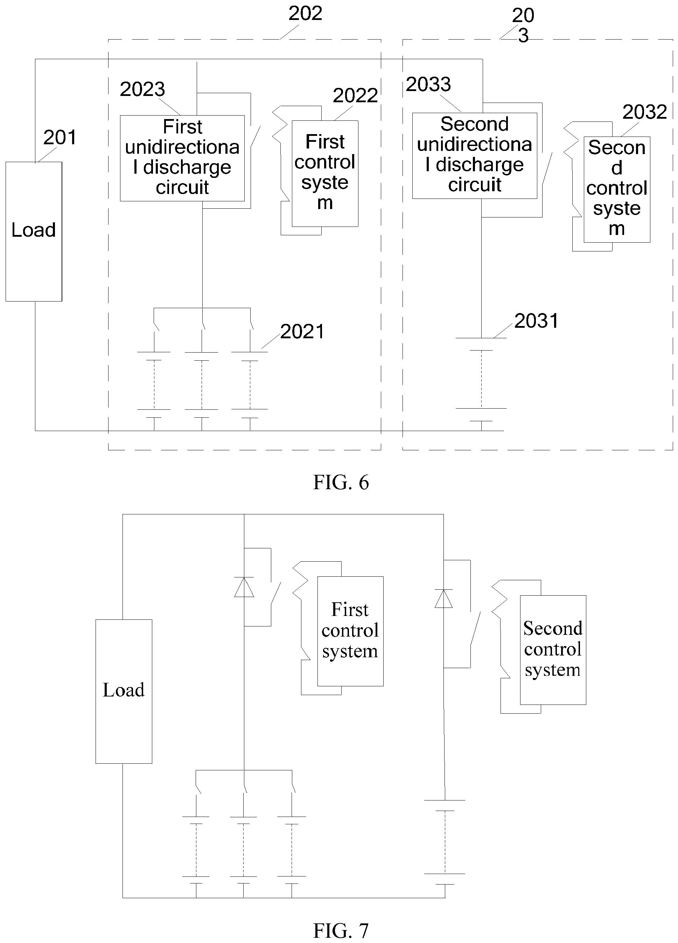

Referring to FIG. 5 and FIG. 6, the embodiment of the present invention provides an uninterruptible power supply system, and the uninterruptible power supply system includes: a load 201, an active battery power supply system 202, and a standby battery power supply system 203.

The active battery power supply system 202 includes an active battery pack 2021 and a first control system 2022, and the standby battery power supply system 203 includes a standby battery pack 2031 and a second control system 2032; the first control system controls the active battery pack to supply power to the load, and the second control system controls the standby battery pack to supply power to the load. The first control system and the second control system form interlocking control, so as to control that only the active battery pack supplies power to the load or only the standby battery pack supplies power to the load at a certain moment.

Specifically, the active battery power supply system further includes a first unidirectional discharge circuit 2023, and the standby battery power supply system further includes a second unidirectional discharge circuit 2033. The first control system 2022 and the first unidirectional discharge circuit 2023 are connected in parallel; the second control system 2032 and the second unidirectional discharge circuit 2033 are connected in parallel. Unidirectional discharge devices are disposed in both the first unidirectional discharge circuit 2023 and the second unidirectional discharge circuit 2033.

An output end of the active battery pack 2021 is connected to an input end of the first unidirectional discharge circuit 2023; an output end of the first unidirectional discharge circuit 2023 is connected to one end of the load 201 and an output end of the second unidirectional discharge circuit 2033; an input end of the second unidirectional discharge circuit 2033 is connected to an output end of the standby battery pack 2031; another output end of the active battery pack 2021 is connected to another end of the load 201 and another output end of the standby battery pack 2031.

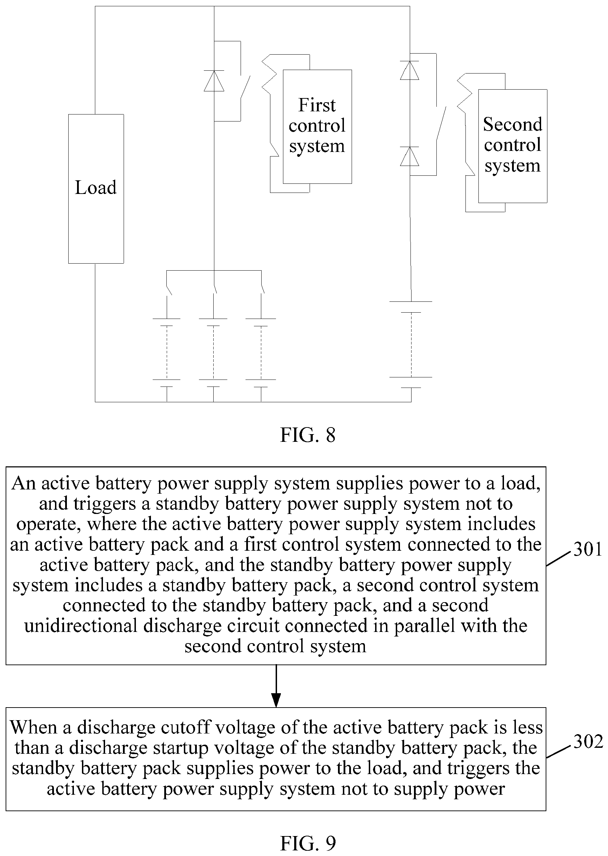

In this embodiment, a discharge cutoff voltage of the active battery pack is required to be greater than a discharge startup voltage of the standby battery pack, and a specific implementation manner is not limited in the embodiment of the present invention. In a practical application, referring to FIG. 7, it may be set that the active battery in the active battery power supply system is formed by N electrochemical cells connected in series, and that the standby battery pack in the standby battery power supply system is formed by N-1, or N-2, or M electrochemical cells connected in series. The specific difference between the number of electrochemical cells connected in series in the standby battery pack and the number of electrochemical cells connected in series in the active battery pack is determined according to battery specifications and a specific application situation. N and M are natural numbers, and N is greater than M, so as to implement that the discharge cutoff voltage of the active battery pack is greater than the discharge startup voltage of the standby battery pack. Referring to FIG. 8, it may also be set that the active battery pack and the standby battery pack have a same number of electrochemical cells connected in series, but the number of unidirectional discharge devices disposed in the first unidirectional discharge circuit is less than the number of unidirectional discharge devices disposed in the second unidirectional discharge circuit, so as to implement that the discharge cutoff voltage of the active battery pack is greater than the discharge startup voltage of the standby battery pack.

The unidirectional discharge device in the embodiment of the present invention may be a diode or an SCR (Silicon Controlled Rectifier, silicon controlled rectifier) or an IGBT (Insulated Gate Bipolar Transistor, insulated gate bipolar transistor). An implementation manner of the unidirectional discharge device is not limited in the embodiment of the present invention.

Specifically, the first control system at least includes a first controller, and the first controller includes three parts, which are a coil, a main contact, and an auxiliary contact; the second control system at least includes a second controller, and the second controller also includes three parts, which are a coil, a main contact, and an auxiliary contact. Once a coil is powered on, a main contact and an auxiliary contact change from a normally open state to a normally closed state and from a normally closed state to a normally open state.

A specific connection manner of various parts of the first controller and the second controller is that the main contact of the first controller and the coil of the first controller are disposed in a corresponding manner, and the auxiliary contact of the first controller is connected to the coil of the second controller; the main contact of the second controller and the coil of the second controller are disposed in a corresponding manner, and the auxiliary contact of the second controller is connected to the coil of the first controller.

In the embodiment of the present invention, the main contact of the first controller and the main contact of the second controller are set to be in a normally open state, and the auxiliary contact of the first control system and the auxiliary contact of the second control system are set to be in a normally closed state.

The first control system controls an operating state of the first controller, and during initialization, the main contact of the first controller is disconnected, the auxiliary contact of the first controller is closed, and the unidirectional discharge device of the first controller is switched on. The second control system controls an operating state of the second controller, and during initialization, the main contact of the second controller is disconnected, the auxiliary contact of the second controller is closed, and the unidirectional discharge device of the second controller is switched on. When a power supply of the load encounters power-off, the first control system uninterruptibly supplies power to the load automatically by means of the unidirectional discharge device of the first control system, and then the first control system controls the first controller to be powered on, controls the main contact of the first controller to switch from a normally open state to a closed state. The active battery pack starts to discharge and supplies power backup to the load. In a discharging process of the active battery pack, a voltage of the active battery pack gradually decreases in a normal range; however, because the discharge cutoff voltage of the active battery pack is greater than the discharge startup voltage of the standby battery pack, the standby battery pack does not operate. When the voltage of the active battery pack decreases to the discharge startup voltage of the standby battery pack, the second control system uninterruptibly supplies power to the load automatically by means of the unidirectional discharge device of the second control system, disconnects the main contact of the first controller, and opens the main contact of the second controller, which implements uninterruptible power supply of the standby battery pack.

In addition, during a discharging process of the standby battery pack, because the first unidirectional discharge circuit connected in series with the active battery pack is disposed in the active battery power supply system, and the main contact of the first controller is disconnected, the standby battery pack does not charge the active battery pack.

Therefore, during power backup in this solution, first, the active battery pack performs power backup, and when the discharge cutoff voltage of the active battery pack is less than the discharge startup voltage of the standby battery pack, the second control system controls the standby battery pack to discharge, and the active battery pack stops discharging, which implements uninterruptible power supply without mutual charging between the battery packs.

As a preferable implementation manner of the foregoing implementation manners, in the embodiment of the present invention, during a discharging process of the standby battery pack, an external power supply is further disposed in parallel on the load, and the external power supply is used to charge the active battery pack; after a preset period of time, the second controller in the second control system is disconnected, that is, the main contact of the second controller is controlled to be disconnected, and the auxiliary contact of the first controller connected to a second control circuit is controlled to switch from a disconnected state to a closed state. The standby battery pack stops supplying power. Due to the interlocking, the auxiliary contact of the second controller switches from the closed state to the disconnected state, and the active battery pack supplies power, which thereby extends a backup time.

As a preferable implementation manner of the foregoing implementation manners, when the unidirectional discharge device is an SCR or an IGBT, the first control system may further send a control signal to the SCR or the IGBT in the active battery power supply system, so that the SCR or the IGBT is conducted; similarly, a second control loop may also send a control signal to the SCR or the IGBT in the standby battery power supply system, so that the SCR or the IGBT is conducted.

In addition, with its peculiar advantages, the lithium-ion power battery is currently widely applied to scenarios such as energy storage, uninterruptible power supply, and D.G. and battery hybrid cycling applications. In high-power applications, first, electrochemical cells need to be connected in series to form battery packs, so as to improve a power supply voltage; then, the battery packs are connected in parallel to improve a power supply current. A battery management system (Battery Management System, BMS) monitors and manages each battery pack connected in series. The lithium-ion battery packs and the BMS together form a lithium-ion power module.

In the embodiment of the present invention, each active battery in the active battery pack is connected to one BMS, and each BMS is configured to control the disconnection or closing of a switch connected in series with the active battery. Specifically, the BMS collects information, such as a voltage, a current, and temperature of a single battery pack, and reports the information to the first control system. The first control system delivers a command to the BMS according to the received information, so as to control the disconnection or closing of the active battery managed by the BMS.

In the embodiment of the present invention, attributes of the active batteries in the active battery pack may be the same, or may be different. If the attributes of the active batteries in the active battery pack are different, information reported to a main control loop by BMSs connected to the active batteries is different at a same moment, and the main control loop may deliver commands in one time period after another according to the information reported by the BMSs, so that the switches connected to the active batteries are closed one by one. If the attributes of the active batteries in the active battery pack are the same, information reported to the main control loop by the BMSs connected to the active batteries is the same at a same moment, and the main control loop may deliver commands to the BMSs at the same time according to the information reported by the BMSs, so that the switches connected to the active batteries are closed at the same time.

According to the uninterruptible power supply system provided in the embodiment of the present invention, the first control system in the active battery power supply system and the second control system in the standby battery power supply system are set as an interlocking control structure; therefore, when the active battery power supply system operates, the standby battery power supply system does not operate, and when the standby battery power supply system operates, the active battery power supply system is not charged; the phenomenon of mutual charging and discharging does not occur between the active battery pack and the standby battery pack, and the problem of inter-pack cross current when battery packs are used in parallel is avoided.

### Embodiment 2

Referring to FIG. 9, the embodiment of the present invention further provides an uninterruptible power supply method, and the method includes:

Step 301: An active battery power supply system supplies power to a load, and triggers a standby battery power supply system not to operate, where the active battery power supply system includes an active battery pack and a first control system connected to the active battery pack, and the standby battery power supply system includes a standby battery pack, a second control system connected to the standby battery pack, and a second unidirectional discharge circuit connected in parallel with the second control system.

Step 302: When a discharge cutoff voltage of the active battery pack is less than a discharge startup voltage of the standby battery pack, the standby battery pack supplies power to the load, and triggers the active battery power supply system to stop supplying power.

The supplying, by the standby battery pack, power to the load, and triggering the active battery pack to stop supplying power specifically includes:
supplying, by the standby battery pack in the standby battery power supply system, power to the load by means of the second unidirectional discharge circuit, and sending a command to the first control system in the active battery power supply system, so that a controller in the first control system is disconnected, to trigger the active battery pack to stop supplying power.

After the triggering the active battery pack to stop supplying power, the method further includes:
controlling, by the second control system in the standby battery power supply system, a controller in the second control system to be closed, so that the standby battery pack in the standby battery power supply system directly supplies power to the load.

According to the method provided in the embodiment of the present invention, the first control system in the active battery power supply system and the second control system in the standby battery power supply system are set as an interlocking control structure; therefore, when the active battery power supply system operates, the standby battery power supply system does not operate, and when the standby battery power supply system operates, the active battery power supply system is not charged; the phenomenon of mutual charging and discharging does not occur between the active battery pack and the standby battery pack, and the problem of inter-pack cross current when battery packs are used in parallel is avoided.

The method provided in this embodiment may specifically be based on the same idea as the apparatus embodiment, and for a specific implementation process thereof, refer to the apparatus embodiment, which is not described herein again.

A person of ordinary skill in the art may understand that all or a part of the steps of the embodiments may be implemented by hardware or a program instructing relevant hardware. The program may be stored in a computer readable storage medium. The storage medium may include: a read-only memory, a magnetic disk, or an optical disc.

The foregoing descriptions are merely exemplary embodiments of the present invention, but are not intended to limit the present invention.

## Claims

1. An uninterruptible power supply system, wherein the system comprises a load (201), an active battery power supply system (202), and a standby battery power supply system (203), wherein:
the active battery power supply system (202) comprises an active battery pack and a first control system (2022), and the standby battery power supply system (203) comprises a standby battery pack and a second control system (2032), wherein the first control system (2022) controls the active battery pack to supply power to the load (201), and the second control system (2032) controls the standby battery pack to supply power to the load (201); and
the first control system (2022) and the second control system (2032) form interlocking control, so as to control that only the active battery pack or only the standby battery pack supplies power to the load (201) at a certain moment;
wherein the active battery power supply system (202) further comprises a first unidirectional discharge circuit (2023), and the standby battery power supply system (203) further comprises a second unidirectional discharge circuit (2033), and
an output end of the active battery pack is connected to an input end of the first unidirectional discharge circuit (2023), an output end of the first unidirectional discharge circuit (2023) is connected to one end of the load (201) and an output end of the second unidirectional discharge circuit (2033), an input end of the second unidirectional discharge circuit (2033) is connected to an output end of the standby battery pack, and another output end of the active battery pack is connected to another end of the load (201) and another output end of the standby battery pack,
**characterized in that**
a discharge cutoff voltage of the active battery pack is greater than a discharge startup voltage of the standby battery pack,
wherein the active battery pack and the standby battery pack are both formed by N electrochemical cells connected in series, the number of unidirectional discharge components disposed in the first unidirectional discharge circuit (2023) is greater than the number of unidirectional discharge components disposed in the second unidirectional discharge circuit (2033), and N is a natural number,
wherein the unidirectional discharge component is a silicon controlled rectifier or an insulated gate bipolar transistor.

2. The system according to claim 1, wherein the first control system (2022) at least comprises a first controller, and a main contact of the first controller and a coil of the first controller are disposed in a corresponding manner; and
the second control system (2032) at least comprises a second controller, a main contact of the second controller and a coil of the second controller are disposed in a corresponding manner, an auxiliary contact of the first controller is connected to the coil of the second controller, and an auxiliary contact of the second controller is connected to the coil of the first controller.

3. A method for an uninterruptible power supply system, wherein the method comprises:
supplying, by an active battery power supply system (202), power to a load (201), and triggering a standby battery power supply system (203) not to operate, wherein the active battery power supply system (202) comprises an active battery pack and a first control system (2022) connected to the active battery pack, and the standby battery power supply system (203) comprises a standby battery pack and a second control system (2032) connected to the standby battery pack; and
when a discharge cutoff voltage of the active battery pack is less than a discharge startup voltage of the standby battery pack, supplying, by the standby battery pack, power to the load (201), and triggering the active battery pack to stop supplying power;
**characterized in**
**that** the active battery power supply system (202) further comprises a first unidirectional discharge circuit (2023), and the standby battery power supply system (203) further comprises a second unidirectional discharge circuit (2033), and
an output end of the active battery pack is connected to an input end of the first unidirectional discharge circuit (2023), an output end of the first unidirectional discharge circuit (2023) is connected to one end of the load (201) and an output end of the second unidirectional discharge circuit (2033), an input end of the second unidirectional discharge circuit (2033) is connected to an output end of the standby battery pack, and another output end of the active battery pack is connected to another end of the load (201) and another output end of the standby battery pack,
wherein the active battery pack and the standby battery pack are both formed by N electrochemical cells connected in series, the number of unidirectional discharge components disposed in the first unidirectional discharge circuit (2023) is greater than the number of unidirectional discharge components disposed in the second unidirectional discharge circuit (2033), and N is a natural number,
wherein the unidirectional discharge component is a silicon controlled rectifier or an insulated gate bipolar transistor.

4. The method according to claim 3, wherein the supplying, by the standby battery pack, power to the load (201), and triggering the active battery pack to stop supplying power specifically comprises:
supplying, by the standby battery pack, power to the load (201) through the second unidirectional discharge circuit (2033), and sending a command to the first control system (2022), so that a controller in the first control system (2022) is disconnected, to trigger the active battery pack to stop supplying power.

5. The method according to claim 3, wherein after the triggering the active battery pack to stop supplying power, the method further comprises:
controlling, by the second control system (2032), a controller in the second control system (2032) to be closed, so that the standby battery pack connected to the second control system (2032) directly supplies power to the load (201).

## Patentansprüche

1. Unterbrechungsfreies Stromversorgungsystem, wobei das System eine Last (201), ein aktives Batteriestromversorgungssystem (202) und ein Standby-Batteriestromversorgungssystem (203) umfasst, wobei:
das aktive Batteriestromversorgungssystem (202) eine aktive Batteriepackung und ein erstes Steuersystem (2022) umfasst, und das Standby-Batteriestromversorgungssystem (203) eine Standby-Batteriepackung und ein zweites Steuersystem (2032) umfasst, wobei das erste Steuersystem (2022) die aktive Batteriepackung zum Zuführen von Strom zur Last (201) steuert, und das zweite Steuersystem (2032) die Standby-Batteriepackung zum Zuführen von Strom zur Last (201) steuert; und
das erste Steuersystem (2022) und das zweite Steuersystem (2032) eine Verriegelungssteuerung bilden, um zu steuern, dass nur die aktive Batteriepackung oder nur die Standby-Batteriepackung der Last (201) zu einem bestimmten Zeitpunkt Strom zuführt;
wobei
das aktive Batteriestromversorgungssystem (202) ferner eine erste unidirektionale Entladeschaltung (2023) umfasst, und das Standby-Batteriestromversorgungssystem (203) ferner eine zweite unidirektionale Entladeschaltung (2033) umfasst, und
ein Ausgangsende der aktiven Batteriepackung mit einem Eingangsende der ersten unidirektionalen Entladeschaltung (2023) verbunden ist, und ein Ausgangsende der ersten unidirektionalen Entladeschaltung (2023) mit einem Ende der Last (201) und einem Ausgangsende der zweiten unidirektionalen Entladeschaltung (2033) verbunden ist, ein Eingangsende der zweiten unidirektionalen Entladeschaltung (2033) mit einem Ausgangsende der Standby-Batteriepackung verbunden ist, und ein anderes Ausgangsende der aktiven Batteriepackung mit einem anderen Ende der Last (201) und einem anderen Ausgangsende der Standby-Batteriepackung verbunden ist,
**dadurch gekennzeichnet, dass**
eine Entladeschlussspannung der aktiven Batteriepackung größer als eine Entladestartspannung der Standby-Batteriepackung ist,
wobei die aktive Batteriepackung und die Standby-Batteriepackung beide durch N elektrochemische Zellen ausgebildet sind, die in Reihe geschaltet sind, wobei die Anzahl von unidirektionalen Entladekomponenten, die in der ersten unidirektionalen Entladeschaltung (2023) angeordnet ist, größer als die Anzahl von unidirektionalen Entladekomponenten ist, die in der zweiten unidirektionalen Entladeschaltung (2033) angeordnet ist, und N eine natürliche Zahl ist,
wobei die unidirektionale Entladekomponente ein steuerbarer Siliciumgleichrichter oder ein Bipolartransistor mit isoliertem Gate ist.

2. System nach Anspruch 1, wobei das erste Steuersystem (2022) mindestens eine erste Steuerung umfasst, und ein Hauptkontakt der ersten Steuerung und eine Spule der ersten Steuerung entsprechend angeordnet sind; und
das zweite Steuersystem (2032) mindestens eine zweite Steuerung umfasst, ein Hauptkontakt der zweiten Steuerung und eine Spule der zweiten Steuerung entsprechend angeordnet sind, ein Hilfskontakt der ersten Steuerung mit der Spule der zweiten Steuerung verbunden ist, und ein Hilfskontakt der zweiten Steuerung mit der Spule der ersten Steuerung verbunden ist.

3. Verfahren für ein unterbrechungsfreies Stromversorgungsystem, wobei das Verfahren umfasst:
Zuführen von Strom durch ein aktives Batteriestromversorgungssystem (202) zu einer Last (201) und Veranlassen eines Standby-Batteriestromversorgungssystems (203), nicht zu arbeiten, wobei das aktive Batteriestromversorgungssystem (202) eine aktive Batteriepackung und ein erstes Steuersystem (2022) umfasst, das mit der aktiven Batteriepackung verbunden ist, und das Standby-Batteriestromversorgungssystem (203) eine Standby-Batteriepackung und ein zweites Steuersystem (2032) umfasst, das mit der Standby-Batteriepackung verbunden ist; und
Zuführen von Strom durch die Standby-Batteriepackung zur Last (201) und Veranlassen der aktiven Batteriepackung zum Stoppen der Stromzufuhr, wenn eine Entladeschlussspannung der aktiven Batteriepackung kleiner als eine Entladestartspannung der Standby-Batteriepackung ist;
**dadurch gekennzeichnet, dass**
das aktive Batteriestromversorgungssystem (202) ferner eine erste unidirektionale Entladeschaltung (2023) umfasst, und das Standby-Batteriestromversorgungssystem (203) ferner eine zweite unidirektionale Entladeschaltung (2033) umfasst, und
ein Ausgangsende der aktiven Batteriepackung mit einem Eingangsende der ersten unidirektionalen Entladeschaltung (2023) verbunden ist, und ein Ausgangsende der ersten unidirektionalen Entladeschaltung (2023) mit einem Ende der Last (201) und einem Ausgangsende der zweiten unidirektionalen Entladeschaltung (2033) verbunden ist, ein Eingangsende der zweiten unidirektionalen Entladeschaltung (2033) mit einem Ausgangsende der Standby-Batteriepackung verbunden ist, und ein anderes Ausgangsende der aktiven Batteriepackung mit einem anderen Ende der Last (201) und einem anderen Ausgangsende der Standby-Batteriepackung verbunden ist,
wobei die aktive Batteriepackung und die Standby-Batteriepackung beide durch N elektrochemische Zellen ausgebildet sind, die in Reihe geschaltet sind, wobei die Anzahl von unidirektionalen Entladekomponenten, die in der ersten unidirektionalen Entladeschaltung (2023) angeordnet ist, größer als die Anzahl von unidirektionalen Entladekomponenten ist, die in der zweiten unidirektionalen Entladeschaltung (2033) angeordnet ist, und N eine natürliche Zahl ist,
wobei die unidirektionale Entladekomponente ein steuerbarer Siliciumgleichrichter oder ein Bipolartransistor mit isoliertem Gate ist.

4. Verfahren nach Anspruch 3, wobei das Zuführen von Strom durch die Standby-Batteriepackung zur Last (201) und das Veranlassen der aktiven Batteriepackung zum Stoppen der Stromzufuhr insbesondere umfasst:
Zuführen von Strom durch die Standby-Batteriepackung zur Last (201) durch die zweite unidirektionale Entladeschaltung (2033) und Senden eines Befehls an das erste Steuersystem (2022), so dass eine Steuerung im ersten Steuersystem (2022) getrennt wird, um die aktive Batteriepackung zum Stoppen der Stromzufuhr zu veranlassen.

5. Verfahren nach Anspruch 3, wobei das Verfahren nach dem Veranlassen der aktiven Batteriepackung zum Stoppen der Stromzufuhr ferner umfasst:
Steuern durch das zweite Steuersystem (2032), dass eine Steuerung im zweiten Steuersystem (2032) geschlossen wird, so dass die Standby-Batteriepackung, die mit dem zweiten Steuersystem (2032) verbunden ist, der Last (201) direkt Strom zuführt.

## Revendications

1. Système d'alimentation sans coupure, dans lequel le système comprend une charge (201), un système d'alimentation par batterie actif (202), et un système d'alimentation par batterie de secours (203), dans lequel :
le système d'alimentation par batterie actif (202) comprend un bloc-batterie actif et un premier système de commande (2022), et le système d'alimentation par batterie de secours (203) comprend un bloc-batterie de secours et un second système de commande (2032), dans lequel le premier le système de commande (2022) commande le bloc-batterie actif pour fournir de l'énergie à la charge (201), et le second système de commande (2032) commande le bloc-batterie de secours pour fournir de l'énergie à la charge (201) ; et
le premier système de commande (2022) et le second système de commande (2032) forment une commande d'interverrouillage, de manière à s'assurer que seul le bloc-batterie actif ou seul le bloc-batterie de secours fournisse de l'énergie à la charge (201) à un moment donné ;
dans lequel
le système d'alimentation par batterie actif (202) comprend en outre un premier circuit de décharge unidirectionnelle (2023), et le système d'alimentation par batterie de secours (203) comprend en outre un second circuit de décharge unidirectionnelle (2033), et
une extrémité de sortie du bloc-batterie actif est connectée à une extrémité d'entrée du premier circuit de décharge unidirectionnelle (2023), une extrémité de sortie du premier circuit de décharge unidirectionnelle (2023) est connectée à une extrémité de la charge (201) et une extrémité de sortie du second circuit de décharge unidirectionnelle (2033), une extrémité d'entrée du second circuit de décharge unidirectionnelle (2033) est connectée à une extrémité de sortie du bloc-batterie de secours, et une autre extrémité de sortie du bloc-batterie actif est connectée à une autre extrémité de la charge (201) et une autre extrémité de sortie du bloc-batterie de secours,
**caractérisé en ce que**
une tension de coupure de décharge du bloc-batterie actif est supérieure à une tension de démarrage de décharge du bloc-batterie de secours,
dans lequel le bloc-batterie actif et le bloc-batterie de secours sont tous deux formés par N cellules électrochimiques connectées en série, le nombre de composants de décharge unidirectionnelle disposés dans le premier circuit de décharge unidirectionnelle (2023) est supérieur au nombre de composants de décharge unidirectionnelle disposés dans le second circuit de décharge unidirectionnelle (2033), et N est un nombre naturel,
dans lequel le composant de décharge unidirectionnelle est un redresseur commandé au silicium ou un transistor bipolaire à grille isolée.

2. Système selon la revendication 1, dans lequel le premier système de commande (2022) comprend au moins un premier contrôleur, et un contact principal du premier contrôleur et une bobine du premier contrôleur sont disposés d'une manière correspondante ; et
le second système de commande (2032) comprend au moins un second contrôleur, un contact principal du second contrôleur et une bobine du second contrôleur sont disposés d'une manière correspondante, un contact auxiliaire du premier contrôleur est connecté à la bobine du second contrôleur, et un contact auxiliaire du second contrôleur est connecté à la bobine du premier contrôleur.

3. Procédé pour un système d'alimentation sans coupure, dans lequel le procédé comprend de :
fournir, par un système d'alimentation par batterie actif (202), de l'énergie à une charge (201), et déclencher un système d'alimentation par batterie de secours (203) pour ne pas fonctionner, dans lequel le système d'alimentation par batterie actif (202) comprend un bloc-batterie actif et un premier système de commande (2022) connecté au bloc-batterie actif, et le système d'alimentation par batterie de secours (203) comprend un bloc-batterie de secours et un second système de commande (2032) connecté au bloc-batterie de secours ; et
lorsqu'une tension de coupure de décharge du bloc-batterie actif est inférieure à une tension de démarrage de décharge du bloc-batterie de secours, fournir, par le bloc-batterie de secours, de l'énergie à la charge (201), et déclencher le bloc-batterie actif pour arrêter de fournir de l'énergie ;
**caractérisé en ce que**
le système d'alimentation par batterie actif (202) comprend en outre un premier circuit de décharge unidirectionnelle (2023), et le système d'alimentation par batterie de secours (203) comprend en outre un second circuit de décharge unidirectionnelle (2033), et
une extrémité de sortie du bloc-batterie actif est connectée à une extrémité d'entrée du premier circuit de décharge unidirectionnelle (2023), une extrémité de sortie du premier circuit de décharge unidirectionnelle (2023) est connectée à une extrémité de la charge (201) et une extrémité de sortie du second circuit de décharge unidirectionnelle (2033), une extrémité d'entrée du second circuit de décharge unidirectionnelle (2033) est connectée à une extrémité de sortie du bloc-batterie de secours, et une autre extrémité de sortie du bloc-batterie actif est connectée à une autre extrémité de la charge (201) et une autre extrémité de sortie du bloc-batterie de secours, dans lequel le bloc-batterie actif et le bloc-batterie de secours sont tous deux formés par N cellules électrochimiques connectées en série, le nombre de composants de décharge unidirectionnelle disposés dans le premier circuit de décharge unidirectionnelle (2023) est supérieur au nombre de composants de décharge unidirectionnelle disposés dans le second circuit de décharge unidirectionnelle (2033), et N est un nombre naturel,
dans lequel le composant de décharge unidirectionnelle est un redresseur commandé au silicium ou un transistor bipolaire à grille isolée.

4. Procédé selon la revendication 3, dans lequel la fourniture, par le bloc-batterie de secours, d'énergie à la charge (201), et le déclenchement du bloc-batterie actif pour arrêter de fournir de l'énergie comprend spécifiquement de :
fournir, par le bloc-batterie de secours, de l'énergie à la charge (201) via le second circuit de décharge unidirectionnelle (2033), et envoyer une commande au premier système de commande (2022), de sorte qu'un contrôleur dans le premier système de commande (2022) est déconnecté, pour déclencher le bloc-batterie actif afin qu'il arrête de fournir de l'énergie.

5. Procédé selon la revendication 3, dans lequel, après le déclenchement du bloc-batterie actif pour arrêter de fournir de l'énergie, le procédé comprend en outre de :
commander, par le second système de commande (2032), un contrôleur dans le second système de commande (2032) pour qu'il soit fermé, de sorte que le bloc-batterie de secours connecté au second système de commande (2032) fournisse de l'énergie directement à la charge (201).
